# EUROPEAN PATENT APPLICATION

(11) **EP 2 607 323 A1**
(43) Date of publication of application: **26.06.2013**
(21) Application number: 10850623.9
(22) Date of filing: 30.12.2010
(51) Int. Cl.: C02F 1/72

(54) **SYSTEM AND PROCESS FOR THE PURIFICATION, BY MEANS OF THE ENVIRONMENT, OF WATER AND/OR OF WATER OBTAINED FROM A MUNICIPAL OR COLLECTIVE SUPPLY, AND/OR OF WATER OBTAINED FROM A WELL, AND/OR OF WATER OBTAINED IN DOMESTIC AND INDUSTRIAL VESSELS**

(30) Priority: 27.04.2010 AR P100101410
(71) Applicant: Kelly, José Luis, Gonnet-La Plata, Buenos Aires (AR); Barragán, Andrea Cecilia, Ciudad Aut Noma, Buenos Aires (AR)
(72) Inventor: Kelly, José Luis, Gonnet-La Plata, Buenos Aires (AR); Barragán, Andrea Cecilia, Ciudad Aut Noma, Buenos Aires (AR)
(74) Representative: Lahidalga de Careaga, Jose Luis
(86) International application number: PCT/IB2010/003378
(87) International publication number: WO 2011/135403

(57) **Abstract**

System and process for the purification, by means of the environment, of water and/or of water obtained from a municipal or collective supply, and/or of water obtained from a well, and/or of water obtained in domestic and industrial vessels having the objective of obtaining potable water suitable for human consumption complying with national and international standards. All the water produced is treated with a selective oxidant obtained from the air, but wherein previously oxygen is concentrated and wherefrom contaminants are eliminated. The water obtained, together with the selective oxidant, is treated through a chemical process, denominated batch process, in a pressurized primary sterilization vessel. The reaction dwell time, and the analytical control, ensure purification; by means of a system of circulation pump and adsorption chamber specific for the chemical treatment realized, the purified water is deposited in a vessel for water for consumption, which water may be prepared with minerals and/or vitamins and/or carbohydrates with the objective of satisfying the full requirements of the population. Furthermore, an electronic unit monitors and controls the movements required to ensure excellent purification and, moreover, that the entire system is sterile at all times.

## Description

### 1) Technical Field of Invention

The present invention refers to a "system and process of water purification from the environment and/or of the water obtained from Municipal or Collective supply, and/or of the water obtained from a well, and/or of the water obtained in domestic and industrial containers" applied in situ with the objective of treating all the organic and inorganic pollutants, micro-organisms, viruses, bacteria, etc. all hazardous to the human being which are contained in the air and/or in the Municipal or Collective waters and/or in the well waters and/or in the waters obtained in domestic and industrial containers and thus make the water that is consumed drinkable, following the national and international regulations; essential fact for the health of the human beings which is one of the basic human rights and one of the columns to decrease the infant mortality as well as to prevent individual and collective diseases.

### 2) Prior art of invention and problems to solve

In general, and as it is well known, one of the problems in obtaining drinkable water mainly for human consumption is the difficulty that involves the fact of providing pipe water to all the inhabitants of the world, either for logistical or economic reasons, for the absence of apt natural resources or very high levels of investment; for these reasons it is necessary to find non- traditional alternatives.

With the traditional system of distribution of the pipe water, used in most countries all over the world, the supply of drinking water to consume is affected by different factors: polluted rivers, polluted ground water, old distribution systems, unsafe distribution systems as regards contamination, containers or building tanks not properly treated in their cleaning or even in the periodicity of such.

All above mentioned causes a situation in which whenever the family opens the tap of their home, the water is not drinkable for the human consumption.

Certainly analyzed by governmental entities from different countries, most of the times hiding information, it is attempted to minimize these topics, even though the true facts of the societies contrast with the not objective view of the situation.

Viral diseases, the data of infant mortality, gastroenteritis, viral infections, fevers, etc. are part of the symptoms that the inhabitants suffer from everyday for the bad hygienic conditions of the water they consume.

However, there is a real and quantum fact that cannot be discussed by anyone and destroys all the official manipulations very usual in all the countries.

The third Newton's law of action and reaction states "For every action there is an equal and opposite reaction."

To the action of receiving water in homes which is not apt for the human consumption coming from urban systems or wells, a reaction was produced from all societies of the world in general, generating a crucial increase of the consumption of bottled water. CONSUMPTION OF BOTTLED WATER IN THE USA

YEAR 1976 1,140,000,000 Its.
YEAR 2008 32,927,000,000 Its.
32 YEARS 31,787,000,000 Its.

As it is observed, an increase of approximately 1,000,000,000 liters a year has been produced.

A similar situation occurs in other countries of the world.

This fact is reflected by the world consumption of bottled water in 2008 reaching 200,000,000,000 - approximately 52,696,000,000 gallons.

This implies the consumption per capita in all the world of 9.6 gallons, approximately 36 liters. (year 2008 data)

In the USA the consumption per capita in the year 2008 was 28.5 gallons - approximately 108 liters.

In South America the consumption per capita in the year 2008 was 15.4 gallons - approximately 58.2 liters.

Today in Argentina it exceeds the 1,500,000,000 liters and if we go back to 30 years ago, the consumption of bottled water did not exist.

In all cases, the consumption of bottled water 30 years ago did not represent the 5% of what is currently consumed.

This fact, the increase of bottled water, is the reaction of the society to the traditional distribution system in which many cases is older than 100 years, and it cannot satisfy the population necessities.

Therefore, we understand that we must turn to a purification system different from the one used so far.

If it is calculated that the theoretical acceptable consumption of water per person is of 250 liters a day, considering a nuclear family of four members, it would be of 1,000 liters a day, and if each family drink only 10 liters a day, the question to be made is: why do we purify 1,000 liters a day per family when we just drink 10 liters a day per family?

We may discuss if these figures can vary according to cold or hot areas in a more or less 10 to 20%, but the percentage of drinking is so low that an intelligent and practical consideration must be paid.

For the formerly mentioned we have bet on a system and process of water purification from the environment and/or of the water obtained from Municipal or Collective supply, and/or of the water obtained from a well, and/or of the water obtained in domestic and industrial containers applied in situ, i.e. in the consumption place, with the objective of the final consumer, in their homes, may be sure that the water consumed is drinkable.

This alternative fills a huge gap and it is also a valid option for emergencies, either natural or manmade, being the drinking water an essential element for life; its rapid replacement in urgent times can avoid intoxications, outbreaks, and non desirable deaths.

In the world trade there are some systems/equipments which claim to be similar, but none of them can obtain drinkable water following the physical- chemical and bacteriological conditions that the international and national regulations demand; they just produce water, they do not produce drinking water for the human consumption, and moreover, they do not guarantee that they are a breeding ground for the formation of mildew, microorganisms, virus and bacteria dangerous for the human body.

Our objective is that the drinkable water that is obtained follows the national and international regulations of alimentary and health control from the physical-chemical viewpoint.

Our invention has been based on various physical-chemical procedures which, in continuous form, allow us to obtain an excellent drinking water quality.

The air has been processed and its main components have been separated, taking the oxygen (02) with a concentration of 90%, practically without any Nitrogen remains or its components, a stabilized source of sterilization which, with approximately 10,000 volts and a frequency of approximately of 20,000 Hz, converts that current of oxygen in a powerful oxidant.

Subsequently we carried out a chemical procedure in a container of primary sterilization which submitted to a positive pressure and to a determined period of time of permanence, time of permanence that is one of the keys of the invented system, allows an oxidation of all the organic and inorganic pollutants as well as microorganisms, viruses, bacteria, etc.

An analytical quantitative control of the procedure permits us to see if the oxidation was complete and permanent in the permanence time, which in general takes several hours. This chemical procedure under pressure is decisive to achieve the excellence in the quality.

Once the chemical procedure is finished to eliminate bad smells from the oxidation, the treated water is passed through a specific absorber that eliminates the used oxidant.

After passing through the absorber, the water prepared for the consumption is sent to the "Consumption Container", container that for technical effect is found permanently with positive pressure of oxidant which avoids any kind of pollution.

In all cases the water to be treated can be from the air; and/or of the water obtained from Municipal or Collective supply, and/or of the water obtained from a well, and/or of the water obtained in domestic and industrial containers.

All the purified waters "in situ" can be treated automatically with saline stabilized solutions in a case and/or isotonic solutions to rehydrate and recover carbohydrates and/or with saline solutions with multivitamins for nutritional shortage.

In all cases, the purification obtained "in situ" emerges from the surrounding air, without any added chemical agents and without damaging the environment.

The mentioned problem has provoked the thought that the solution has to do with the provision of a ""system and process of water purification from the environment and/or of the water obtained from Municipal or Collective supply, and/or of the water obtained from a well, and/or of the water obtained in domestic and industrial containers." Likewise, the inventor knows various systems/apparatus/devices/mechanisms of the water obtaining from the environment, published in documents of patents which deserve to be mentioned for their importance, among the ones that can be quoted:
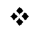 ES 1062793 U: "Generator of drinking water, which was designed to obtain water by the freezing of moisture in the air ..." Denominating "Generator of drinking water" to a machine that produces only water but it does not eliminate all the harmful contaminants that the air can bring, both from the scientific and human points of view, is reckless. The dangerous pollutants can be: nitrogen monoxide, nitrogen dioxide, microorganisms, viruses, bacteria, etc. For example, the intake of significant concentrations of nitrite in water can cause severe intoxications and death. Therefore this patent produces water only, under any circumstances it generates drinking water.
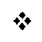 WO2004027165 A1**:** "The invention is related to a dehumidifier and an apparatus which is used to produce drinkable water ...." Saying that the apparatus is used to produce drinkable water but not treating all the harmful contaminants that the air can bring, from the scientific and human points of view this is reckless. The dangerous pollutants can be: nitrogen monoxide, nitrogen dioxide, microorganisms, viruses, bacteria, etc. For example, the intake of significant concentrations of nitrite in water can cause severe intoxications and death. Thus this patent produces water only, under any circumstances it generates drinking water.
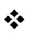 US 5149446 A**:** "It describes a device to treat drinking water from an environmental source ...." As this device is designed, it does not make the water obtained drinkable. All it does is to filter the water produced, but it does not eliminate all the harmful contaminants that the air can bring, which considering this, both from the scientific and human points of view, is reckless. The dangerous pollutants can be: nitrogen monoxide, nitrogen dioxide, microorganisms, viruses, bacteria, etc. For example, the intake of significant concentrations of nitrite in water can cause severe intoxications and death. Thus this patent produces water only, under any circumstances it generates drinking water.
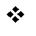 **U6343479 B1:** "It describes a device to treat drinking water obtained from the vapor contained in the environment ...." As this device is designed, it is ready to obtain water from the air, but it does not purify it, because it is said to purify that water with a germicidal lamp, a lamp whose germicidal incapacity is proved; however, not treating all the harmful contaminants that the air can bring, from the scientific and human points of view, is reckless. The dangerous pollutants can be: nitrogen monoxide, nitrogen dioxide, microorganisms, viruses, bacteria, etc. For example, the intake of significant concentrations of nitrite in water can cause severe intoxications and death. Thus this patent produces water only, under any circumstances it generates drinking water.
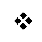 US 5553459 A**:** "It is a machine that obtains drinkable water from the environmental air..." As this device is made, it is prepared to get water from air, but it does not purify it because it just treats it with a filter and UV light, a UV lamp whose germicidal incapacity is proved, but not treating all the harmful contaminants that the air can bring, from the scientific and human points of view, is reckless. The dangerous pollutants can be: nitrogen monoxide, nitrogen dioxide, microorganisms, viruses, bacteria, etc. For example, the intake of significant concentrations of nitrite in water can cause severe intoxications and death. Thus this patent produces water only, under any circumstances it generates drinking water.
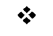 WO 0163059 A1**:** "Device to extract drinkable water from air..." As this device is designed it produces water, but it does not purify it so not treating all the harmful contaminants that the air can bring, from the scientific and human points of view, is reckless. The dangerous pollutants are: nitrogen monoxide, nitrogen dioxide, microorganisms, viruses, bacteria, etc. For example, the intake of significant concentrations of nitrite in water can cause severe intoxications and death. Thus this patent produces water only, under any circumstances it generates drinking water.
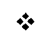 EP 0597716 A1**:** "It is a device to collect drinkable water from the atmosphere..." As this device is designed, it collects water from the atmosphere, but it cannot be drunk because the water just passes through a filter which removes impurities, but it does not eliminate all the harmful contaminants that the air can bring; from the scientific and human points of view this is reckless. The dangerous pollutants can be: nitrogen monoxide, nitrogen dioxide, microorganisms, viruses, bacteria, etc. For example, the intake of significant concentrations of nitrite in water can cause severe intoxications and death. Thus this patent produces water only, under any circumstances it generates drinking water.
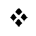 US 4255937 A**:** "This device collects drinkable water from the atmosphere and then it can be drunk." As this device is designed, it can produce water but it cannot be drunk, i.e. it does not produce drinkable water because passing the water extracted from the air through a filter which removes impurities and a UV lamp but not eliminating all the harmful contaminants that the air can bring, from the scientific and human points of view, is reckless. The dangerous pollutants can be: nitrogen monoxide, nitrogen dioxide, microorganisms, viruses, bacteria, etc. For example, the intake of significant concentrations of nitrite in water can cause severe intoxications and death. Thus this patent produces water only, under any circumstances it generates drinking water.
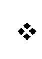 EP 1939364 A1**:** "It generates water by condensing the environmental humidity." This equipment generates only water, but it does not produce drinkable water because not treating all the harmful contaminants that the air can bring, from the scientific and human points of view, is reckless. The dangerous pollutants can be: nitrogen monoxide, nitrogen dioxide, microorganisms, viruses, bacteria, etc. For example, the intake of significant concentrations of nitrite in water can cause severe intoxications and death. Thus this patent produce water only; under any circumstances it generates drinking water.

The substantial difference between the present requested invention and the background previously presented is that the latter uses carbon filters and a UV lamp to purify, fact which is proved, and it does not follow the demanded national and international regulations. Several are the factors but the most noticeable one is that the UV lamps, of great bactericide power and enclosed in a domestic equipment, lose their bactericide power in 15 or 30 days for different factors: the opalescence of the quartz, tension, minerals absorption, etc., which it does not guarantee the quality of the obtained water. Likewise, we know that in the world market publications of patents that use similar oxidants, but not selective ones as we use in this invention; however, in any of the cases it is carried out a controlled chemical process with quality control, pressurized and with a period of permanence time that turns it in a Batch Process. Therefore, they do not generate drinkable water because they are discontinued processes; depending on the stage in which the water to be consumed is collected, this will be of different quality. We can mention amongst others: US2007295021, US2006059922,30 US20090077992, US6684648**,** WQ2007133771**.**

### 3) Purpose and principle of operation

The present invention refers to a "system and process of the water purification from the environment and/or of the water obtained from Municipal or Collective supply, and/or of the water obtained from a well, and/or of the water obtained in domestic and industrial containers, applicable with the aim of treating organic and inorganic pollutants, microorganisms, viruses, bacteria, dangerous for the intake of the human beings, and in this way it can be achieved that the water to consume may be drinkable and follows the national and international regulations of alimentary control and health.

The object of the invention of achieving purification "in situ" allows to develop terminal units either at homes, offices, schools, neighborhoods, etc. which guarantee that the water obtained may be apt for consumption.

The proposed system will eventually eliminate the bottled water, which is the answer that the society took for not trusting the massive distribution systems and/or the quality of the water extracted in the underground wells, etc.

Thousands of data in the laboratories in Argentina and the whole world reveal the lack of quality of the water in homes and/or terminals of lines.

Likewise, we want the water produced for consumption as well as the whole system that contains the water to have a permanent and sterile atmosphere.

Similarly, we also find that the products created to generate a very selective and effective oxidation do not carry pollutants of the air that generates sub products which would form chemical products that would affect the quality of the water sensitively.

The chlorine, bactericide used in massive way, causes important inconvenient for the sub products that originates, and we have treated and achieved to synthesize and isolate an oxidant more powerful than the chlorine without leaving residual effects.

The invented system presents several alternatives, all of them with the common objective. From the viewpoint of the obtaining of the water we can divide the system in two big groups:
a) Water obtained from the environment
b) Water obtained from Municipal or collective system, water obtained from wells, and water obtained from domestic or industrial containers.

We can say that for obtaining a) water obtained from the environment basically the system consists of a water generator unit, constituted by a refrigerating equipment set in such a way that its energy consumption is minimized, taking advantage of the availability of the system. A fan circulates air from the environment at a predetermined speed through an air filter, an evaporator and a condenser. The evaporator is composed of horizontal tubes and fins in a vertical position which, for its geometry, arrangement and chemical composition, ensures a high heat transfer, allowing greater efficiency in the recovery of the air humidity of the environment that circulates in it. The entire system is controlled by an alternative compressor. The different changes of temperature and humidity of the air that is taken from the environment are information which is transmitted to the cooling system so that it controls properly the functioning of the various components of the unit which generates water and adjusts itself with the objective of obtaining greater efficiency in the recovery of water.

With the objective of increasing the efficiency in the obtaining of water we have a Humidity Generator which functions with an additive of not drinkable water which generates permanent fog at the entrance of the air circulation to the refrigerating equipment, these water drops are carried by the air current and are left in the evaporator tubes.

We can say that to obtain b) Water obtained from Municipal or collective system, water obtained from wells, and water obtained from domestic or industrial containers the system basically consists of a direct connection to the provision source stated in b by means of an electro valve that allows to regulate the flow of the entering water to make it in the form of drops and follows the permanence period of time of the physical-chemical process that will be stated later on.

The water obtained either by the procedure a) water obtained by the environment or b) Water obtained from Municipal or collective system, water obtained from wells, and water obtained from domestic or industrial containers is collected in a tray which has a filter that removes impurities and suspended solids, and in this tray the water, like the fins of the condensing water, is given a dose of the oxidant which begins the chemical and bacteriological attack to the water and prevents the formation of mold in the evaporator.

The water is channeled to the Pressurized Container of Primary Sterilization.

This container, core of the purifying system "in situ", is adjusted to work under positive pressures and is made of an apt material to receive strong oxidants.
Likewise, the container of Primary Sterilization has a control system of level, electronically operated, which allows a strict control of the permanence of the water to be treated for a period of several hours.

Moreover, this container has an equipment of analytical quantitative control of the chemical process which regulates the time of permanence of the operation.

It also has a presostatic valve which allows to operate the process under regulated positive pressure.

The system is complete with the entrance of a selective oxidant which is set to a diffuser designed with the objective of making the entering water have a direct and efficient contact.

The selective oxidant mentioned in the treatment of the process of primary sterilization is one of the chemical components that take part in the purification; therefore, its formation requires special cares.

As the proposed system is made for the purifying equipments "in situ", i.e. homes, offices, schools, hospitals, etc., it is not possible to start from selective gaseous components or industrially purified; we must start from the air.

As in general the air is composed of 78% of nitrogen and 21% of oxygen, we must, before starting the process of generating the oxidant, generate a separation of the different air components.

Through an oxygen concentrator we converted the air current of a 21% of oxygen to a current of approximately 90%-95% of oxygen.

This selection, apart from concentrating oxygen, permits to eliminate components of nitrogen in its different forms which together with the environmental humidity form non desirable components in the purification and do not allow to have drinkable water under the national and international regulations.

From a current of concentrated oxygen we direct it to a Source of Stabilized Sterilization which works with approximately 10,000 volts and 20,000 Hz and under these conditions it converts the current of oxygen in a powerful selective oxidant, free from impurities and unwanted chemical agents.

All set forth above, The Water Condenser, The Container of Primary Sterilization and the Generator of selective oxidant converge in a chemical process to be developed in the Container of Primary Sterilization, process controlled chemically and its valuable characteristic results from the "time of permanence" in which the process occurs, which in general takes several hours; to this chemical process we denominate "Batch Process".

The Batch Process through an important period of time of permanence, positive pressure, analytical control and a system of level control guarantees a purification treatment "in situ" which is the adequate for the elimination of organic and inorganic pollutants, microorganisms, viruses, bacteria, etc.

The process does not continue until having the quality of the obtained water guaranteed and although the user demands the water, this will not be available until the chemical process is complete.

As the oxidant is less soluble in water, after attacking chemically and biologically, a sterile atmosphere is formed on top of the water which prevents future contamination in the walls of the container.

The excess of oxidant is sent to the container of water consumption.

The sterilized water treated chemically and bacteriologically is sent through a water pump of extraction and circulation to the adsorption chamber containing an absorbent that eliminates the natural smells of water and / or produced in the sterilization.

This chamber of absorption has a bed inside made of a material with high specific surface, a proper distribution of pore sizes that makes it accessible to the adsorbent.

The adsorbent acts as a catalyst and turns the oxidant in oxygen, which eliminates tastes or odors generated by the oxidation.

This water, after passing through the adsorption chamber, is sent to a container of water for consumption, container that is designed with components that do not attack the oxidants and is suitable for storing water for human consumption.

Simultaneously with the entry of water into the container of water for consumption, an oxidant enters whose origin is the primary container of sterilization. That oxidant is not bubbled in the water, it just forms a sterilized atmosphere that prevents the formation of mold or microorganisms on the walls.

The excess of the oxidant is sent to the reception tray of condensing in the water-generating unit.

However, once you generate the water needed to complete the system and the generating unit of water is off, the stabilized source of sterilization starts operating in sequential periods generating the additional oxidizer which provides a permanent sterilization in the complete system.

The container of water for consumption which receives the treated water from the primary container of sterilization has as a quality complement dispensers of salts that, depending if the water is obtained from a) water obtained from the environment or b) Water obtained from Municipal or collective system, water obtained from wells, and water obtained from domestic or industrial containers, can incorporate salts to achieve balanced mineral water in the case that the water is produced by a) water obtained from the environment or with isotonic solutions to rehydrate and recover carbohydrates and/or with saline solutions with multivitamins for nutritional shortage, these two latter for waters produced in a) water obtained from the environment or b) Water obtained from Municipal or collective system, water obtained from wells, and water obtained from domestic or industrial containers.

As it is observed according to the previously mentioned, we have powered in this invention - above all questions - the fact of ensuring the quality of the water to the maximum.

We have tried to eliminate all the harmful gaseous pollutants. Likewise, generating a Batch system of chemical process with a high and necessary permanence in time, we guarantee the quality of the treated water. A specific adsorbent specially manufactured, which guarantees insipid, colorless and odorless water, and the conditioning of specific salts, optional for each case, form a unique system of obtaining water that, as we pointed out at the beginning, will replace bottled water with absolute guarantee.

We save the plastic of the containers, the bottling, the distribution, the supermarket's stacks, your purchase, your transport, and above all the insecurity of what we are drinking at a price 20 times higher to the drinkable water that our invention produces.

### 4) Brief Description of Figures

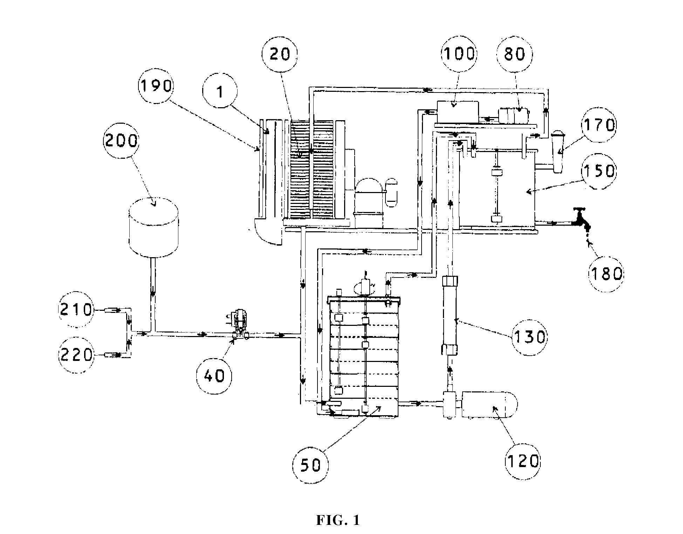

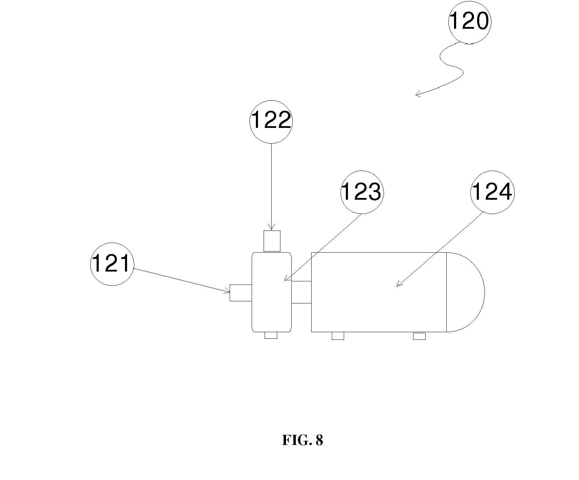

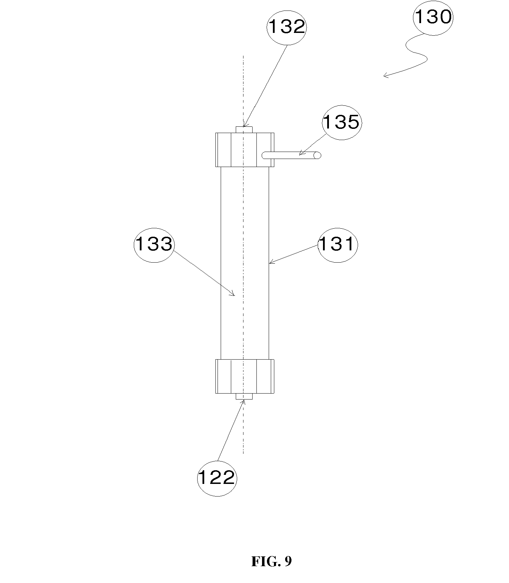

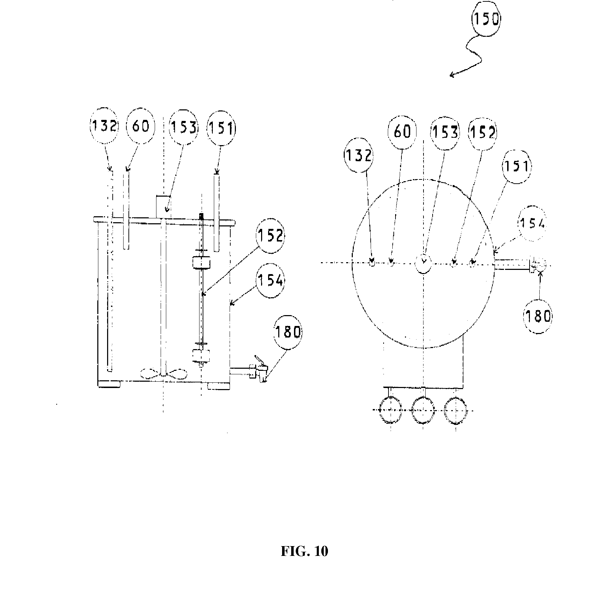

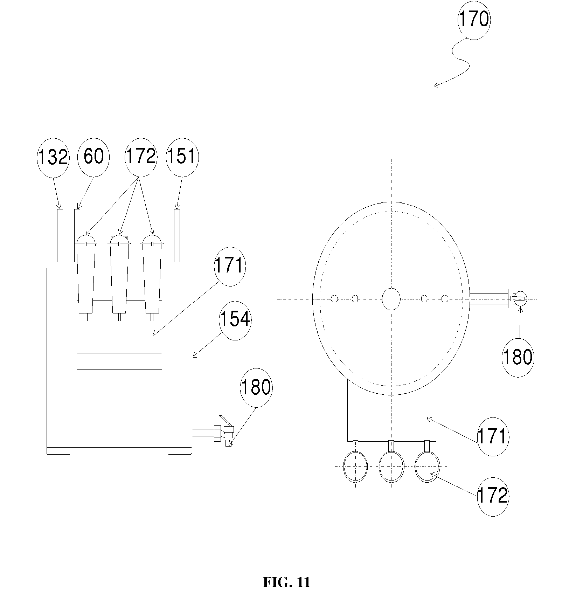

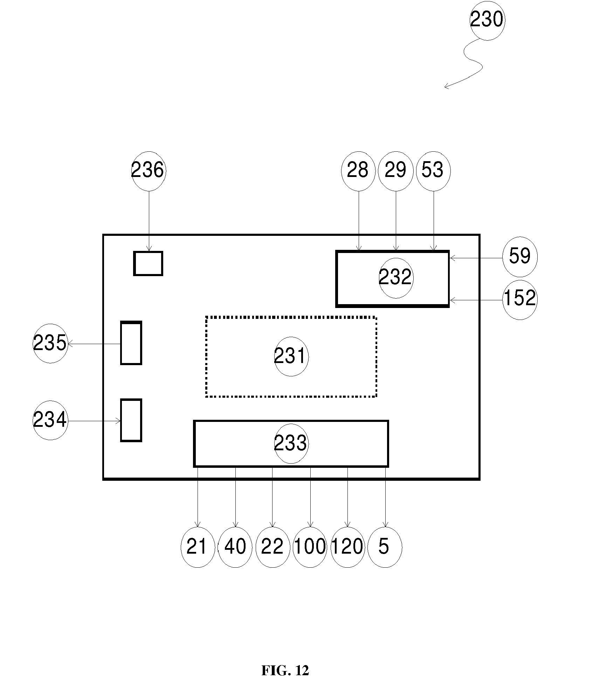

a) In Figure 1 a schematic view of the present system is illustrated, where we can observe the following:
   1. Receptor unit of air from the environment
   20. Water Condenser Unit
   40. Electro valve
   50. Primary Container of Sterilization
   80. Oxygen Concentrator
   100. Stabilized source of sterilization
   120. Circulation Pump
   130. Adsorption Chamber
   150. Water Consumption Container
   170. Dispensers
   180. Tap for Drinkable Water to Consume
   190. Air
   200. Bottled Water
   210. Pipe Water
   220. Well Water
b) In Figure 2 it is illustrated a schematic view of the Receptor Unit of air from the environment consisting of:
   2. Humidity Generator
   3. Entry Conduit of not drinkable water
   4. Floating device
   5. Diffusing Pump
   6. Water Circulation Conduit
   7. Sprays/ Atomizers
   8. Fog
   9. Retention Filter
   10. Water Tank
   190. Air Circulation
c) In Figure 3 it is illustrated a schematic view of the receptor container (1) of air from the environment and the water condenser unit 20 that consist of:
   21. Compressor
   22. Forcer Air Fan
   23. Vaporizer/ Condenser
   24. Supporting Structure
   25. Condenser Tray
   26. Condensing Exit Conduit 190. Air Entrance
   27. Filter
   28. Temperature Sensor of Condensation
   29. Temperature and Humidity Sensor
   151. Oxidant Surplus
d) In Figure 4 it is illustrated a schematic view of the electro valve 40 consisting of:
   41. Entry of Pipe/Well/Bottled Water
   42. Exit of Regulated Water
   43. Electronic Control of Flow Regulation
   151. Oxidant Surplus
e) In Figure 5 it is illustrated a schematic view of the Oxygen Concentrator consisting of:
   81. Air Entry
   82. Compressor
   83. Separator of Gases by Adsorption
   84. Nitrogen Exit
   85. Gases Rich in Oxygen
   86. Air Filter
   87. Oxygen Filter
f) In figure 6 it is illustrated a schematic view of the Stabilized Sterilization Source 100 consisting of:
   85. Entry of Rich Gases in Oxygen
   57. Oxidant Exit
   103. Compressor
   104. Source of Electric Energy of High Frequency
   105. Converter
   106. Forcer Air Fan
   107. Plastic Fireproof Structure
   108. Electronic/ Electric Controller
g) In Figure 7 it is illustrated a schematic view of the Primary Sterilization Container consisting of:
   51. Alloy Structure Apt for Oxidants
   52. Engine to Spin Shaft
   53. Floating Devices for the Process Control
   54. Homogenizing Tray for gas/liquid phase
   55. Mix Diffuser gas/water
   26. Entry Conduit of Condensed Water
   42. Entry Conduit of Water of Electro valve
   57. Entry Conduit of Oxidant
   58. Presostatic Valve
   59. Analytical Quantitative Control
   60. Conduit Fork of Canalization to Send the oxidant surplus
   121. Sterilized Water Conduit
h) In Figure 8 it is illustrated a schematic view of the circulation pump 120 consisting of:
   121. Sterilized Water Conduit
   122. Water Conduit with oxidant
   123. Alloy Structure Apt for Oxidants
   124. Electric Engine
i) In Figure 9 it is illustrated a schematic view of the Water Container to consume 150 consisting of:
   131. Structure Apt for Oxidants
   122. Water Conduit with oxidant
   132. Water Conduit without oxidant
   133. Adsorbent
   135. Oxygen Exit
j) In Figure 10 it is illustrated a schematic view of the Water Container to consume 150 consisting of:
   132. Water Conduit without oxidant
   60. Oxidant Entry
   151. Oxidant Exit to Condensed Tray
   180. Drinkable Water to consume
   152. Floating Devices for Level Control
   153. Mixer
   154. Apt Structure Oxidant
k) In Figure 11 it is illustrated a schematic view of dispensers of minerals 170 consisting of:
   171. Dispensers
   172. Hermetic Hopper
l) In Figure 12 it is illustrated a schematic view of the electronic control device 230 consisting of:
   231. Microcontroller
   232. Sensors Entry
   233. Exit to interface of actors
   234. Connection Port with Programmer
   235. Exit to Indicator Screen
   236. Electric Supply

### 5) Detailed Description of the Invention

The present invention has as objective a "system and process of water purification from the environment and/or of the water obtained from Municipal or Collective supply, and/or of the water obtained from a well, and/or of the water obtained in domestic and industrial containers."

This system can be powered by solar and / or wind energy.

Basically the system consists of two well differentiated phases:
1) Obtaining of the Water to Purify
2) Purification of the Water Obtained in point 1

In relation to the obtaining of water to purify, as we have previously mentioned, we can divide the system of water obtaining in two big groups:
a. Water obtained from the environment
b. Water obtained from Municipal or Collective supply, and/or of the water obtained from a well, and/or of the water obtained in domestic and industrial containers.

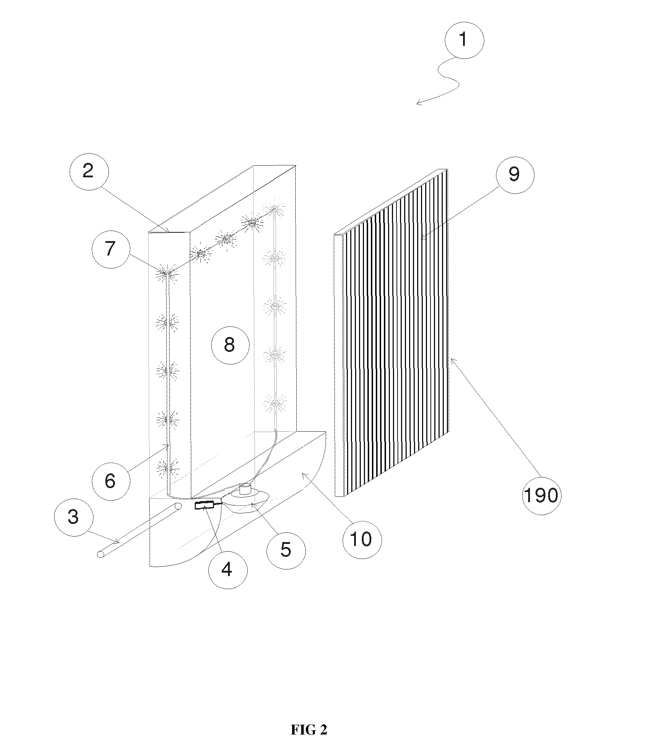

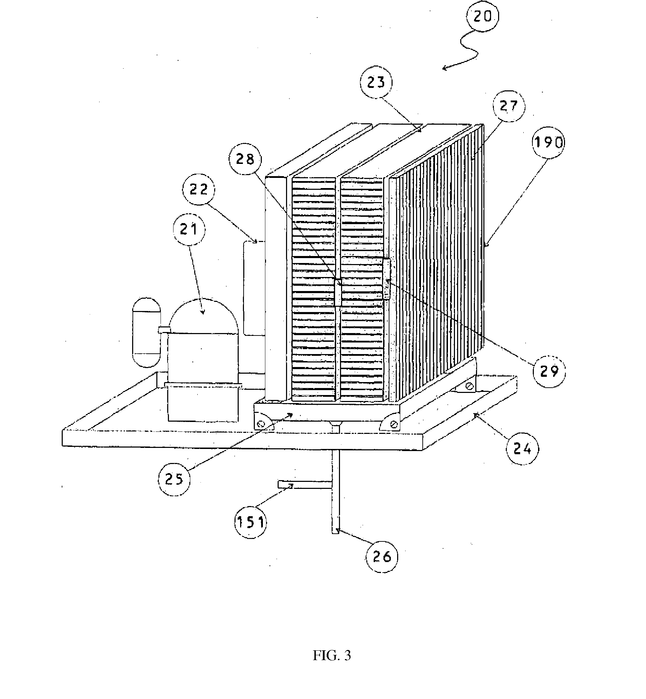

We can say that to obtain water a) water obtained from the environment, see fig.2 and fig.3, basically the system consists of a water generating unit 20, made from a refrigerating equipment, set in such a way that its energetic consumption is minimum. A forcer fan 22 makes the air circulate to the environment 190 at such a speed that allows a great efficiency of the condensing unit of water 23.

Before the condensation the air is filtered through a filter 27 which retains impurities, insects, dust in suspension, etc.

The evaporator is made of horizontal tubes and fins in vertical way and for its geometry, disposition and chemical composition ensures a great thermic transfer, allowing a great efficiency in the recovery of the humidity of the air from the environment that circulates through it.

All the system is commanded by an alternative compressor 21.

The different variables of temperature and humidity of the air taken from the environment are information that is transmitted to the refrigerating system so that it properly controls the functioning of the different components of the water generating unit and it adjusts itself with the objective of obtaining a higher efficiency in the water recovery.

As the quantity of water that can saturate a cubic meter of water depends on the temperature and the atmospheric pressure, for example, a cubic meter of water at 10º C can contain 9,8 grams of water per cubic meter of air, and at 35º C it can contain 47,1 grams of water per cubic meter of air, the system receives information through environmental sensors of temperature and moisture and generates a working operation according to the data recorded in the water generator unit 20, in order to achieve the maximum performance in obtaining water from the environment.

As a result the condensation system has a temperature sensor of condensation 28 which works in coordination with the sensor 29, control of the temperature and humidity from the environment.

All the set is supported by a metallic anticorrosive structure 24.

The water which the evaporator retains condenses through the cold wall of the flapped set and is collected in a tray 25 which has a filter that removes impurities and suspended solids. On the same tray the collected water, as all the evaporator system, receives a regulated dose of sterilizing oxidant that attacks the water in its initial phase and besides prevents the formation of mold or other contaminants in the evaporator.

The water obtained in the tray 25 is channeled through the conduit 26 to the stabilized container of sterilization 50. In the tray 25 the water receives an injection of remaining oxidant 51 of the physical-chemical process.

To further the efficiency to obtain water we are provided with a humidity generator, Fig 2 equipment 1, made of an air entrance 190 originated by the forcer fan 22, fig.3, which circulates by means of a particles' filter 9.

On the other hand, the not drinkable water that can be used to increase the efficiency is sent to 3, flow that is regulated by a floating device 4.

Once the water container 10 is filled, a floating dispenser pump 5 sends the water through the circulation conduits 6 from which it is sent to the sprays/atomizers 7 and from the originated Spray a necessary fog 8 is formed.

This produced fog is carried through the air current 190 to the water condenser 20 (Fig.3).

All the system of humidity generator 1 is supported by a structure 2.

This humidity generator is used to supply the efficiency of the system, mainly in periods when the environmental temperature and humidity are not completely favorable in the obtaining of important quantities of water.

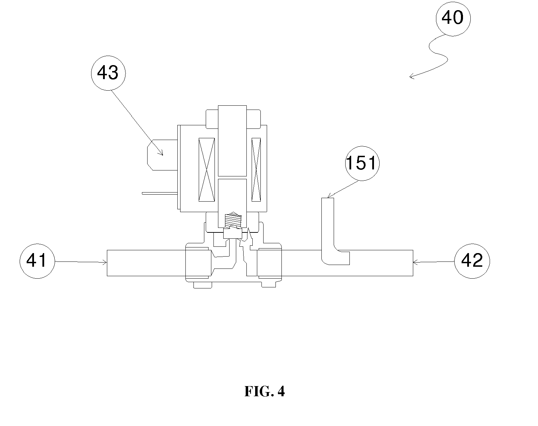

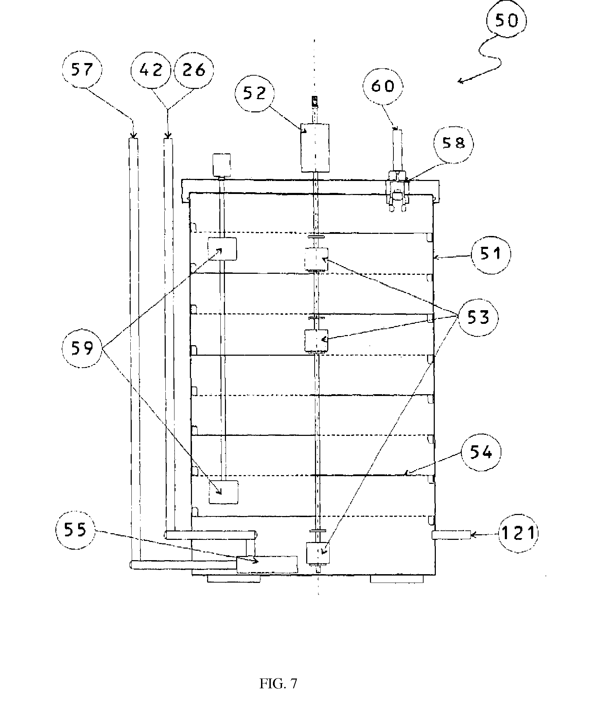

Likewise, we can say that to obtain water from b) water obtained from Municipal or Collective supply 210, and/or of the water obtained from a well 220, and/or of the water obtained in domestic 200 and industrial containers, the system allows a direct connection of the mentioned sources through an entry conduit 41, fig.4, which by an electronic control of flow regulation 43 permits a regulated and controlled water exit 42 which links the exit conduit of condensation 26 and finally to the primary container of sterilization 50 (Fig.7).

So far we have described the two different ways to obtain water a and b, however, none of these waters have the drinkability conditions and to do so we must carry out a chemical process in which the obtained water is treated with a powerful selective oxidant.

As we are seeking for an efficient system in time and quality, we had to turn to a selective oxidant i.e. we had to eliminate the highest possible quantity of pollutants that the air carries.

In general the chemical composition of the air is approximately 78% of nitrogen and 21% of oxygen, which constitutes the 99% and the rest corresponds to noble gases, water vapor, carbon dioxide, and in industrial zones hydrocarbons, ashes, sulfurous anhydride, etc.

The electric discharges modify the composition and once produced we can find nitric acid, ammoniac, nitrogen oxides which act as pollutants for the objective of the purification.

For this reason, we must carry out a previous separation of the air before the formation of the oxidant.

If that previous separation was not done, the pollutants would affect the degree of the quality of the water obtained, mainly the PH, the composition of nitrogen components, etc.

One of the possibilities we have is to use the concentrated pure oxygen as a supply source to the oxidant generator, however, we find the problem that if we want to do the "Purification in Situ", i.e. in each home, office, school, building, we do not have such element to use it in massive way; we only have the air from which we must extract most of the oxygen and separate at the same time the components that would affect the chemical process later on.

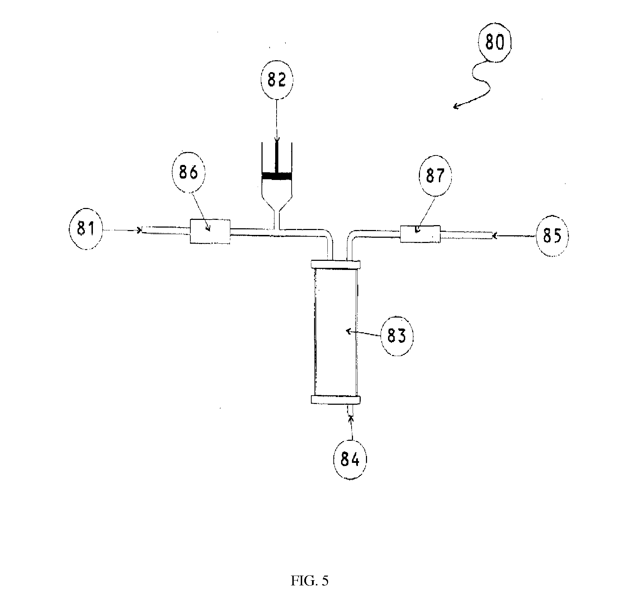

To carry out the operation we are provided with an oxygen concentrator 80, fig.5, which has an air entry 81, an air filter 86, and a compressor 82, and a gas separator by a selective adsorbent which separated most of the nitrogen of the air 84 and releases the rich gases through a filter 87 and then to the exit 85.

This oxygen current has an approximate concentration of 90-95% of oxygen compared to the one of the entry of 21%.

This way, either by adsorption, double filtration of the air and the oxygen we eliminate the unwanted components.

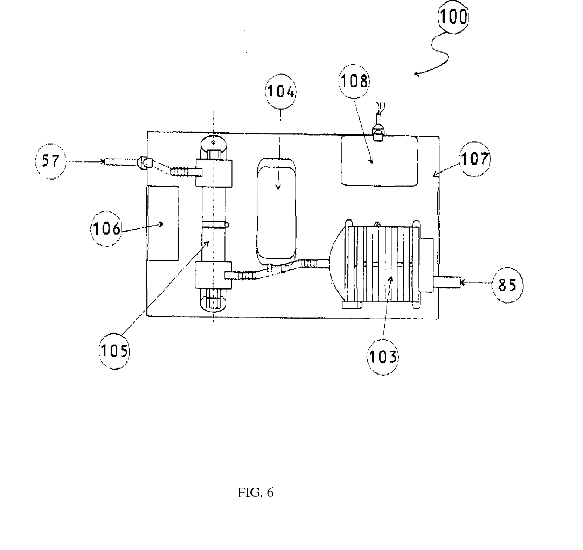

The current of gases rich in oxygen is channeled to the stabilized source of sterilization 100, fig.6, which at a very high voltage, over 10,000 volts, and in a frequency above 20,000 Hz produces a specific voltaic arc for the current rich in oxygen that enters and in this way it is converted in a very concentrated selective oxidant.

When oxygen molecules are submitted to a very intense electric field of polarity variable in time a breakage of the molecules is produced known as "ionization".

The subsequent recombination of the ionized atoms results in a product of great capacity of oxidation.

The polarity variable in the time of "frequency" of the electric field multiplies the performance of the process.

A compressor 103 injects oxygen 85 in the ring-shaped space of a device made of two tubular concentric metallic electrodes separated by an insulating ceramic of high permanent dielectric.

The tubular electrodes are connected to a source of energy 104 that allows to create the electric field of polarity variable, supplying high tension (over 10,000 volts) and of frequency above 20,000 Hz, adequate to initiate the ionization of the injected oxygen.

The device in question called converter 105 is manufactured in such a way that the electrodes and the tubular ceramic are supported in their ends by both heads whose material and geometry provide the adequate electric insulation of high tension as well as the corresponding channelization for the entry and exit of gases through connectors.

All the system enables to convert the gases rich in oxygen in a powerful selective oxidant gas 57.

This oxidant 57 is channeled to the primary sterilization container 50.

Summary:

The water obtained by a) water obtained from the environment or b) water obtained from Municipal or Collective supply, and/or of the water obtained from a well, and/or of the water obtained in domestic and industrial containers and channeled through the conduit 26 or 42 (fig.3-fig.4) respectively do not fulfill the conditions for drinkability, thus we will describe the chemical process of "Purification In Situ" in the following section.

To do so we are provided with a primary sterilization container 50 (fig.7) whose main supply is the water obtained 26 and/or 42 and the selective oxidant 57. To this chemical process we denominate "Batch Process".

Despite all the continuous process, this Batch Process is completely the opposite: it is discontinuous in which it is considered the "permanence time" that takes the chemical process between the water obtained and the used selective oxidant, generally taking several hours.

"Batch Process" that works at positive pressure by a presostatic valve 58 (fig.7) and provides an analytical quantitative control 59 (fig.7) that guarantees the success of the operation.

Analytical control that allows to follow the process until chemically is finished i.e. the treated water may be free from pollutants, viruses, microorganisms, bacteria, etc.

Even though the user demands water, this will not be available until the chemical process is complete.

As the used oxidant is slightly soluble in water, after acting in the obtained water, it forms in the upper part of the primary sterilization container 50 (fig.7) a sterile atmosphere which prevents the future contamination on the walls and top of the container.

The container of primary sterilization 50, fig.7, is made up of a cylindrical container with an alloy structure apt for oxidants 51, a water entry 26 and/or 42, an entry of selective oxidant 57; both entries, of water and oxidant, converge to a mix water/gas dispenser 55.

They system by an engine to spin the axle 52 operates a group of homogenizer trays phase gas/liquid 54 and at the same time a group of floating devices used for the control process 53.

It is also part of the system a piece of equipment of analytical quantitative control 59 and a presostatic valve 58 which generates during the chemical process a positive pressure in the container.

When the pressure beats the established regulation for the operation, the excess of the oxidant 60 is sent to the container of water to consume 150.

When the chemical process is finished and just in this moment, not before, the sterilized treated water 121 is vacuumed by the pump 120.

The efficiency of the oxidizer is referenced in that its Redox potential (V) is of 2.07 while that of the chlorine (bactericide used worldwide) is of 1.36.

Moreover, the produced oxidation is very effective for small inorganic species, namely:

2Fe⁺² + Oxidant + 5 H₂O→ 2 Fe (OH)₃ ppdo. + O₂ + 4 H⁺

Mn⁺² + Oxidant + H₂O→ MnO₂ ppdo. + O₂ + 2H⁺

NH₃ + Oxidant →NO₃⁻ +4 O₂ + H₃O⁺

NO₂⁻ + Oxidant → NO₃⁻ + O₂

S₂⁼+ Oxidant →SO₄⁼ + 4 O₂

CN⁻ + Oxidant →2CO₂ + N₂ + 3 O₂ + H₂O

The most widespread application is the oxidation of Fe⁺² y Mn⁺², species that can give color to the water and cause the growth of bacteria depending on such elements. Also, the oxidation of NO₂⁻, nitrite converted in NO₃, nitrate, is one of the most important reactions because, generally, the nitrites are parts of the air of the environment and they are in the water that condenses. The intake of water with important concentration of nitrite generates severe intoxications and death.

Besides it produces the oxidation of organic micro pollutants (elimination of odors and flavors, phenolic compounds, pesticides, etc.), the disinfection and removal of algae.

The oxidant used produces the inactivation of the bacteria by oxidation: first the oxidant works on glycoproteins, glycolipids and some amino acids. In the cellular interior, the oxidant attacks enzymatic system and the nuclear material producing their destruction. In the viruses the oxidation is produced in first place on the capsid proteins of the virus to then attack the nucleic acid inside.

The oxidation which we carry out is different from the chlorine oxidation in which the chlorine leaves undesirable sub products of the disinfection.

The importance of this sterilization is that we have achieved not to leave residuals effects in the water to consume.

Once the primary sterilization or the sterilization "in situ" of the water obtained is achieved, the water is sent to the circulation pump 120, fig. 8, whose main body is an alloy apt for oxidants 123 activated by an electric engine124. The water propelled through the conduit 122 is sent to the chamber of adsorption 130, fig.9.

This chamber made up of a structure apt for oxidants 131 has two exits: one of water without oxidants 132 and a residual oxygen exit 135.

The adsorption chamber 130 contains a selected and specific adsorbent 133, with a great power of adsorption that allows to eliminate some odor or undesirable flavor in the water to consume.

The specific adsorbent 133 works as a catalyst and turns the oxidant in oxygen, eliminating all kinds of smells or undesirable flavors generated by the oxidation.

The adsorbents used present high specific surface, between 1,000 and 2,000 m²/ g. The high values of specific surface depend are largely due to the porosity they present.

The adsorption is a process by which the atoms on the surface of a solid attract and retain molecules of another component.

These attraction forces are known as forces of Vander Waals.

Therefore, as this is a phenomenon that occurs on the surface, the larger the available superficial area of a solid is, the better the adsorbent will be.

All the carbon atoms on the surface of a crystal are capable of attracting molecules of compounds that cause color, odor, or undesirable flavor.

The difference of the selected specific adsorbent 133 for our invention is the quantity of atoms on the available surface to carry out the adsorption.

By means of the water vapor and CO2 chemical reactions are produced that eliminate carbon atoms producing the necessary porosity for the adsorption.

A high specific surface with a distribution of sizes of pores that makes it accessible to the adsorbent is a necessary condition to optimize the preparation of the Adsorbent Bed 133 (Fig.9).

Once the adsorption chamber is used, the water without oxidant, odor, flavor, or color comes out of the conduit 132 and is sent to the container of water to consume 150, Fig 10.

This container is made up of a structure apt for the oxidant 154 and it has a water entry without oxidant 132 from the adsorption chamber so that it does not mix with the remaining oxidant excess 60 from the primary sterilization container 50 is sent to the bottom of the container150.

The container has a mixer 153 which works in coordination with dispensers of minerals 170 (Fig.10).

Likewise, it has a system of floating devices that control the levels of the container and are indicators of the state itself.

Through the oxidant entry 60, the oxidant is not bubbled in the water; it just forms a sterilized atmosphere that prevents the formation of mold or microorganisms on the walls and on the lid of the water container to consume 150.

The oxidant excess is sent to a condensing tray 25 (Fig.3) through the conduit 151 with the objective of being sterile at the beginning of the dripping or at the exit of the electro valve 42, or to the exterior.

The water stored in the container 150 is ready to be consumed through the tap 180 (Fig.10).

As it is observed in all the narration, both the water produced to consume and all the system that contains it have sterile atmosphere permanently.

Likewise, once the physical-chemical process is finished totally and the containers 50 and 150 are complete and without water requirement to consume 180, with the objective of having all the system sterilized, the oxygen concentrator 80 and the source of stabilized sterilization 100 start working in sequential way to generate enough oxidant for the sterilization of the system. This takes place during 24 hours in the 365 days of the year.

Regarding all the chemical analysis obtained in the different waters, we have detected in societies in general of the different countries common problems.

These common problems are reflected in the different qualities of the bottled water that is sold in the countries.

Under the basis of the studies done we can say that the drinkable water 180 obtained comes from the water a) water obtained from the environment, which has a low mineral content.

If on the contrary the drinkable water 180 is obtained from b) water obtained from Municipal or Collective supply, and/or of the water obtained from a well, and/or of the water obtained in domestic and industrial containers, it has minerals of origin.

On the basis of the comparative discussion presented previously we have designed to such effect dispensers of minerals 171 and their corresponding hermetic hoppers 172 (Fig.11).

By these dispensers we can say at first, considering the basic requirements of the populations, that we can mineralize the waters according to the following concept:
A= The drinkable water 180 obtained of the environment it can be incorporated minerals, polivitamincs, carbohydrates, etc, with the objective of achieving the following:
   1. Balanced Mineral Water
   2. Water for Sportspeople
   3. Water for Nutritional Shortage
B= To the drinkable water 180 obtained from Municipal or Collective supply, and/or of the water obtained from a well, and/or of the water obtained in domestic and industrial containers it can be incorporated minerals, polivitamincs, carbohydrates, etc. with the objective of achieving the following:
   2. Water for sportspeople
   3. Water for Nutritional Shortage

With the purpose of making clear what each specified variant means we can say that:

### 1.BALANCED MINERAL WATER

### CHEMICAL COMPOSITION

**SODIUM:** 70 MG/LTS.
**POTASSIUM:** 1 MG/LTS.
**CALCIUM:** 100 MG/LTS.
**CHLORIDE:** 70 MG/LTS.
**PHOSPHORUS:** 50 MG/LTS.

### FUNCTIONS OF EACH ELEMENTS:

**SODIUM:** with the potassium, this mineral is closely related with the regulation of the corporal fluids. It regulates the balance of the corporal fluids in and out of the cells. It keeps the level of fluids in blood.

**POTASSIUM:** It works with the sodium to regulate the balance of the water in the body and stabilizes the cardiac rhythm (the potassium works in the cells; the sodium out of them). When the balance sodium-potassium is altered, the nervous and muscular functions are affected.

**CALCIUM:** It keeps the bones and teeth in healthy conditions; it takes part in the muscular contraction and in the blood coagulation. It helps to have a better transmission of the nervous impulses. It regulates the arterial pressure and intervenes in the blood coagulation.

**CHLORIDE:** It forms the hydrochloric acid of the stomach and it is found in the fluids with the sodium working together in the distribution of the corporal liquids. It participates in the digestion of the food. It helps eliminate the waste matter of the organism.

**PHOSPHORUS:** It is present in all the cells of the body. The calcium and the phosphorus must be balanced to work properly. It stimulates the bones growth and maintenance. It keeps the gums and teeth in healthy conditions. It helps in the metabolism of the carbohydrates and fats, giving energy in all the cells of the organism.

### 2- WATER FOR SPORTSPEOPLE:

### CHEMICAL COMPOSITION:

**SODIUM CHLORIDE:** 450 MG/LTS.
**POTASSIUM CHLORIDE:** 120 MG/LTS.
**CARBOHYDRATES:** 60 GRAMS (GLUCOSE OR SUCROSE)

### FUNCTIONS OF EACH ELEMENT

**SODIUM:** with the potassium, this mineral is closely related with the regulation of the corporal fluids. It regulates the balance of the corporal fluids in and out of the cells. It keeps the level of fluids in blood.

**POTASSIUM:** It works with the sodium to regulate the balance of the water in the body and stabilizes the cardiac rhythm (the potassium works in the cells; the sodium out of them). When the balance sodium-potassium is altered, the nervous and muscular functions are affected.

**CARBOHYDRATES:** they are the fuel or the basic energetic source of the organism. They are the best means of fuel that the brain can assimilate and use.

### 3-WATER FOR NUTRITIONAL SHORTAGE:

### CHEMICAL COMPOSITION:

**SODIUM:** 107 MG/LTS.
**POTASSIUM:** 1 MG/LTS
**CALCIUM:** 200 MG/LTS.
**ZINC:** 3 MG/LTS
**CHLORIDE:** 350 MG/LTS.
**PHOSPHORUS:** 100 MG/LTS.
**IRON: 0.2 MG/LTS.**
**CARBOHIDRATES:** 75 MG/LTS.
**VITAMIN C:** 60 MG/LTS.
**VITAMIN B1:** 1 MG/LTS.
**VITAMIN B3:** 10 MG/LTS.
**VITAMIN B6:** 1.5 MG/LTS.
**VITAMIN B9:** 150 MICROGRAMS/LTS.
**VITAMIN B12:** 1 MICROGRAM/LTS.

### FUNCTIONS OF EACH ELEMENT

**SODIUM:** with the potassium, this mineral is closely related with the regulation of the corporal fluids. It regulates the balance of the corporal fluids in and out of the cells. It keeps the level of fluids in blood.

**POTASSIUM:** It works with the sodium to regulate the balance of the water in the body and stabilizes the cardiac rhythm (the potassium works in the cells; the sodium out of them). When the balance sodium-potassium is altered, the nervous and muscular functions are affected.

**CALCIUM:** It keeps the bones and teeth in healthy conditions; it takes part in the muscular contraction and in the blood coagulation. It helps to have a better transmission of the nervous impulses. It regulates the arterial pressure and intervenes in the blood coagulation.

**ZINC:** it is involved in several functions of the organism and is part of many enzymatic systems. It is essential for the synthesis of proteins and regulates the contraction of muscles. It takes part in the synthesis of insulin, it is important for the formation of red corpuscles and the balance of acidity and alkalinity of the organism. It is important in the development of all the reproductive organs.

**CHLORIDE:** It forms the hydrochloric acid of the stomach and it is found in the fluids with the sodium working together in the distribution of the corporal liquids. It participates in the digestion of the food. It helps eliminate the waste matter of the organism.

**PHOSPHORUS:** It is present in all the cells of the body. The calcium and the phosphorus must be balanced to work properly. It stimulates the bones growth and maintenance. It keeps the gums and teeth in healthy conditions. It helps in the metabolism of the carbohydrates and fats, giving energy in all the cells of the organism.

**IRON:** it is found in each cell of the body. It participates in the metabolism of the vitamins of the complex B. It helps in the growth, stimulates the resistance against infections, prevents the anemia and fatigue, improves the muscular tone and increases the concentration, the memory and the learning capacity.

**CARBOHYDRATES:** they are the fuel or the basic energetic source of the organism. They are the best means of fuel that the brain can assimilate and use.

**VITAMIN C:** essential for the organism, it helps form collagen in the connective tissue of the skin, cartilage, discs, articulations, capillary walls, bones and teeth. It helps in the formation of the thyroid hormones. It helps in the iron absorption; it helps in the use of the carbohydrates, synthesis of fats and proteins and the preservation and integrity of the walls of the blood vessels.

**VITAMIN B1:** It has a key role in the production of energy. It is vital for the proper functioning of the nervous system. It helps metabolize de carbohydrates to convert them in energy. It keeps the health of the cellular membrane, stimulates the growth and the learning capacity.

**VITAMIN B3:** It contributes in the release of energy from the food and in the formation of necessary substances for the use of fats and sugars. It takes part in the maintenance of the normal functioning of the skin and the nervous and digestive systems.

**VITAMIN B6:** It has several functions in the organism, especially in the metabolism of the amino acids and the central nervous system. It works in the metabolism of proteins, carbohydrates and fats. It helps in the formation of antibodies and blood and insulin cells. It regulates the balance of the corporal fluids.

**VITAMIN B9:** It is absorbed in the gastrointestinal system; it is transported by the blood and works in a wide variety of functions. It helps in the formation of proteins. It is essential for the division of cells in the body, mainly in the growing stage, pregnancy and the normal development of the child in their first years of life. It takes part in the formation of normal red vessels.

**VITAMIN B12:** It helps the functioning of the iron as raw material to elaborate red vessels. It stimulates the use of proteins, fats and carbohydrates. It improves the growth, cellular development, and the blood cells. It takes part in the making of the covering of the nervous cells and the maintenance of the normal functioning of the nervous system.

The complete physical-chemical process of purification "in situ" of the water and the system in general is operated under commands and orders generated from an electronic device (230) (Fig.12).

The general system is the result of an organized sequence of stages which are sustained in the signs sent by the sensors of water level detection of each container (53) and (152) belonging to the primary sterilization container (50) and the water container to consume (150) respectively.

The control system (230) will use the information received, among other things, to:
1. Control the entrance of water to be processed either by means of activating the condensing system through the air (20) or activating the electro valve (40) if it is water from pipe, well, or domestic container.
2. Deactivate the corresponding elements to prevent spills.
3. Activate and deactivate the source of stabilized sterilization (100) according to the necessities of the process.
4. Activate and deactivate the circulation pump (120) to move the water from one container to another.
5. Control of time in the chemical process regulated by a specific analytical control. 59

Once established the necessary conditions of functionality and interaction that the control system must follow, it results in a complex electronic circuit, reason for having designed a special and specific program for such objective, based on a controller of peripheral interface (231) that is programmable through a connection port with an organizer peripheral programmer (234) that allows not only all the functions and sequences demanded by the process but it also has its own routine of failures supervision which confer stability and reliability.

The user counts on the information at all times which allows them to know in which stage of the process is (in real time) through an indicator screen (235) (Fig.12).

For all the exposed above, we can say that this original invent considers several fundamental concepts for the life of the human being and above all it prioritizes the environment not using chemical agents in the "in situ" purification; moreover, we have incorporated the concept that through the water we can improve the life of human beings, specially the poor.

In other concepts this invention takes into account the following:
1) To replace the centenarian system of purifying 1,000 liters per day per family when only 10 liters are consumed.
2) To invent an integrated and safe system of purification "in situ" with the purpose of reaching the places where there is no water and at the same time offer the replacement of the bottled water in the places where there is water but it is not trustworthy for the human consumption.
3) To reduce considerably the cost of the water to drink for the human beings.
4) This system permits to reach all the populations of a country: the poor classes, the middle classes, the depending classes, i.e. offer drinkable water to the whole world.
5) A system that can provide water not only with electric energy but also with solar and/or wind energy.
6) A system that helps to decrease drastically the infant mortality, viral diseases, etc.
7) A system valid for emergencies, either natural or manmade.
8) In all cases the purification "in situ" obtained emerges from the surrounding air without any additional chemical agents or damaging the environment.
9) A system that is permanently sterilized.
10) A system that allows to prepare the water according to the family necessities: balanced water for sportspeople, water for nutritional shortage, etc.

Lastly, the "Process of Water Purification" used in the system is made up of the following stages:
a) To condense the water contained in the air through refrigerating equipment.
b) To increase the efficiency of water obtaining by means of a humidity generator that is used with drinkable and/or not drinkable water.
c) To obtain water from Municipal or Collective supply, and/or of the water obtained from a well, and/or of the water obtained in domestic and industrial containers by an electronic control of flow regulation that regulates the exit of water with the purpose of its posterior treatment, maintaining flow degrees from 2 liters per hour to 50 liters per hour.
d) By means of an oxygen concentrator to raise the concentration of it in the air from 21% to 90-95%, eliminating the pollutants and the most of the nitrogen preventing the formation of unwanted oxidants of nitrogen.
e) To generate an oxidant through the current rich in oxygen channeling it to a source of Stabilized Sterilization in which at a high voltage over 10,000 volts and a at a high frequency above 20,000 Hz a selective oxidant can be produced.
f) The temperature of the waters obtained from a) or c) will be in the range of 5ºC and 25ºC, ideal temperatures to accept the chemical reactions thereafter.
g) To carry out a Batch Process in a primary sterilization container through a Chemical Process generated between the selective oxidant in e) and/or in any of the waters obtained in procedures a) or c) and adequate to the temperatures indicated in f) with the process submitted to a range of pressure between 10 grams and 100 grams. And with a permanence time or chemical reaction between the pollutant and the selective oxidant not less than 2 hours, parameters in function of the quality of the oxygen generated, which is regulated by an analytical controller that allows to check the operative variables and determine the end of the Chemical Process.
h) To carry out an adsorption process with the water free of pollutants with the purpose of obtaining colorless, odorless, insipid water, basic conditions for the water to be drinkable which is done by a specific adsorbent from 1,000 to 2,000 m2g. In this operation the totality of the oxidant excess is separated and it is important to point out that the generated selective oxidant is slightly soluble in water which benefits in this stage. As this is a natural oxidant, it does not leave residual effects in the water.
i) To channel the water without any oxidant, odor, taste, or color to a water container to consume.
j) To be provided with a balanced system of sterilization of all the circuits and containers which permanently and even after a power cut or similar, the system must remain inert with the selective oxidant to prevent any bacterial contamination or any of other kind.
k) To be provided in the container of obtained water with two dispensers of minerals in which it can be incorporated minerals, polivitaminics, carbohydrates with the purpose of obtaining balanced water, water for sportspeople, water for the poor.
l) Be provided with an electronic device that controls the physical-chemical process of water purification in situ completely. The electronic device is the result of an organized sequence of stages generated by the sensors of level control of the different containers.

According to all the exposed and illustrated, it is easy to understand the advantages of practical order that are offered in such system and water purification process; therefore the following claims fulfill the implications of the invention.

## Claims

1. System of water purification from the environment and/or water from Municipal or Collective supply, and/or of the water obtained from a well, and/or of the water obtained in domestic and industrial containers applied "in situ" **characterized in** what comprises:
I. A receptor unit of air from the environment that includes at least a filtering source and a humidity generator.
II. A condensing water unit from the receptor unit.
III. At least a collector tray with filtering devices of impurities and solids in suspension of the water obtained in such condensing unit.
IV. At least a regulator electro valve of the water flow from Municipal or Collective supply, and/or of the water obtained from a well, and/or of the water obtained in domestic and industrial containers.
V. Auxiliary devices made up of an oxygen concentrator, eliminator of pollutants, and a stabilized sterilization source to generate a selective oxidant permanently.
VI. A container of primary sterilization, receptor of the collected water by the condensing unit or by the flow supplied by the electro valve and the supplied selective oxidant by the stabilized sterilization source from which water is obtained chemically and bacteriology.
VII. An extraction pump of treated water connected through a conduit fork to the primary sterilization container.
VIII. An adsorption chamber of the water sent by the pump of extraction.
IX. A container in sterile atmosphere, receiving and storing of drinking water to consume by means of a tap, previously channeled through the adsorption chamber.
X. At least an auxiliary dispenser device of minerals, and/or vitamins, and/or carbohydrates connected to such container in with sterile atmosphere.

2. Water purification system, considering claim Nº1 **characterized by** the humidity generator which consists of a water container in its interior connected to a not drinkable water entry conduit in which a floating device and a dispenser pump are connected to a water circulation conduit associated to a number of water sprays in countercurrent to the air circulation to generate fog.

3. Water purification system, according to claim N^{ª}1, **characterized by** the water condensing unit which sensors of temperature of condensation and temperature and humidity, including a group composed by an auxiliary compressor, an air forcer fan, a filter as an air filtering means of the air circulation and an evaporator/condenser connected in its inferior area to a condensing tray; all the system held by a supporting structure in which a condensing exit conduit and an oxidant excess fork emerge.

4. Water purification system, according to claim Nª1, **characterized by** a primary sterilization container with an alloy structure where in its interior it is found an axle activated by an engine with floating devices of process control, a homogenized tray gas/liquid phase and a mix gas/water diffuser associated to conduits of oxidant entry, condensed water entry, water electro valve entry and sterilized water exit.

5. Water purification system, according to claim Nº4, **characterized by** the primary sterilization container which has a conduit fork of channelization (60) to send the excess of selective oxidant connected with the drinkable water container to consume.

6. Water purification system, according to claim Nº1, **characterized by** the adsorption chamber which has a specific adsorbent environment for this process with a specific surface from 1,000 to 2,000 m2/gr.

7. Water purification system, according to claim Nº6, **characterized by** the stabilized source of sterilization with has an entry of gases rich in oxygen connected to a compressor associated to an electric energy source of high frequency and to a converter with an oxidant exit conduit, an electronic controller and an air forcer fan all supported by an fireproof plastic structure.

8. Water purification system, according to claim Nº7, **characterized by** the stabilized source of sterilization (100) works with energy above 1,000 volts and a higher frequency of 20,000 Hz.

9. Water purification system, according to claim Nº1, **characterized by** the container of water to consume which has an apt oxidant structure that includes an entry conduit of water without oxidant, a water entry with oxidant, a mixer, floating devices for the level control of the drinkable water, an exit conduit of oxidant, and a tap for water to consume.

10. Water purification system, according to claim Nº1, **characterized by** an electronic device of control that includes a group made up of microprocessor, sensors entry, actuators exit to interface, connection port with programmer, indicator screen exit and electric supply.

11. Water purification system, according to claim Nº1, characterized because it has the following stages:
i. To condensate the obtained water by refrigerating equipment.
ii. To increase the efficiency of water obtaining by a humidity generator that is used with drinkable water and/or not drinkable.
iii. To obtain water from Municipal or Collective supply, and/or of the water obtained from a well, and/or of the water obtained in domestic and industrial containers by an electronic control of regulation of the flow which regulates the water exit to treat it subsequently. Keep flow range between 20 liters per hour to 50 liters per hour.
iv. To raise the concentration of the oxygen in the air by an oxygen concentrator from 21% to 90-95%, eliminating all the pollutants and most of the nitrogen preventing the formation of unwanted nitrogen oxides.
v. To generate an oxidant through the current rich in oxygen channeling to a stabilized sterilization source in which at high voltage above 10,000 volts and at a higher frequency than 20,000Hz a selective oxidant is achieved.
vi. The temperature of the obtained waters in a) or c) will be in the range between 5ºC and 25ºC, ideals temperatures to accept the subsequent chemical reactions.
vii. To carry out a Batch Process in a primary sterilization container in which through a Chemical Process generated between the selective oxidant obtained in e) and/or any of the waters obtained from the procedure a) or c) and adequate to the indicated temperatures in f), the process submitted to a range of pressure between 10 grams and 100 grams and with a permanence time or chemical reaction between the pollutants and the selective oxidant not less than 2 hours, parameters which are in function to the quality of the generated oxidant, which is all regulated by an analytical controller that permits to check the operative variables and determine the end of the chemical process used.
viii. To carry out the adsorption process with the water free of pollutants with the purpose of obtaining colorless, odorless and insipid water, basic conditions for the water to be drinkable, which is all done by a specific adsorbent from 1,000 to 2,000m2/g. In this operation separating the totality of the remaining oxidant is to be considered, the generated selective oxidant is slightly soluble in water which helps in this stage. As it is a natural oxidant, it does not leave residual effects in the water.
ix. To channel the water without oxidants, odorless, tasteless, and insipid to a water container to consume.
x. To be provided with a balanced system of sterilization of all the circuits and containers in which, permanently and subsequently to a power cut, must remain inert with the selective oxidant to prevent any bacterial contamination or any of other kind.
xi. To be provided in the container of water to be obtained with two dispensers of minerals in which it can be incorporated minerals, polivitaminics, carbohydrates with the purpose of obtaining balanced water, water for sportspeople, water for the poor.
xii. To be provided with an electronic device that controls the physical-chemical process of water purification in situ completely. The electronic device is the result of an organized sequence of stages generated by the sensors of level control of the different containers.

## Amended claims

### Amended claims under Art. 19.1 PCT

**1.** System of water purification from the environment and/or water from Municipal or Collective supply, and/or of the water obtained from a well, and/or of the water obtained in domestic and industrial containers applied "in situ" **characterized in** what comprises:
i. A receptor unit of air from the environment that includes at least a filtering source and a humidity generator.
ii. A condensing water unit from the receptor unit.
iii. At least a collector tray with filtering devices of impurities and solids in suspension of the water obtained in such condensing unit.
iv. At least a regulator electro valve of the water flow from Municipal or Collective supply, and/or of the water obtained from a well, and/or of the water obtained in domestic and industrial containers.
v. Auxiliary devices made up of an oxygen concentrator, eliminator of pollutants, and a stabilized sterilization source to generate a selective oxidant permanently that has an entry of gases rich in oxygen associated to a compressor connected to an electric energy source of high frequency and at the same time to a converter with an exit conduit of the oxidant, an electronic controller, and an air forcer fan all supported by a fireproof plastic structure.
vi. A container of primary sterilization, receptor of the collected water by the condensing unit or by the flow supplied by the electro valve and the supplied selective oxidant by the stabilized sterilization source from which water is obtained chemically and bacteriology; and such primary sterilization container has an alloy interior in which an axle is activated by an engine with floating devices of process control, a homogenizer tray gas/liquid phase, and a and a mix dispenser of gas/water connected to conduits of oxidant entry, condensed water entry, electro valve water entry and sterilized water exit; and it also includes a conduit fork of channeling to send the selective oxidant excess connected to a drinkable water container to consume.
vii. An extraction pump of treated water connected through a conduit fork to the primary sterilization container.
viii. An adsorption chamber of the water sent by the pump of extraction.
ix. A container in sterile atmosphere, receiving and storing of drinking water to consume by means of a tap, previously channeled through the adsorption chamber.
x. At least an auxiliary dispenser device of minerals, and/or vitamins, and/or carbohydrates connected to such container in with sterile atmosphere.

**2.** Water purification system, considering claim Nº1 **characterized by** the humidity generator which consists of a water container in its interior connected to a not drinkable water entry conduit in which a floating device and a dispenser pump are connected to a water circulation conduit associated to a number of water sprays in countercurrent to the air circulation to generate fog.

**3.** Water purification system, according to claim Nª1, **characterized by** the water condensing unit which sensors of temperature of condensation and temperature and humidity, including a group composed by an auxiliary compressor, an air forcer fan, a filter as an air filtering means of the air circulation and an evaporator/condenser connected in its inferior area to a condensing tray; all the system held by a supporting structure in which a condensing exit conduit and an oxidant excess fork emerge.

**4.** Water purification system, according to claim Nº1, **characterized by** the adsorption chamber which has a specific adsorbent environment for this process with a specific surface from 1,000 to 2,000 m2/gr.

**5.** Water purification system, according to claim Nº7, **characterized by** the stabilized source of sterilization (100) works with energy above 1,000 volts and a higher frequency of 20,000 Hz.

**6.** Water purification system, according to claim Nº1, **characterized by** the container of water to consume which has an apt oxidant structure that includes an entry conduit of water without oxidant, a water entry with oxidant, a mixer, floating devices for the level control of the drinkable water, an exit conduit of oxidant, and a tap for water to consume.

**7.** Water purification system, according to claim Nº1, **characterized by** an electronic device of control that includes a group made up of microprocessor, sensors entry, actuators exit to interface, connection port with programmer, indicator screen exit and electric supply.

**8.** Water purification system, according to claim Nº1, characterized because it has the following stages:
a. To condensate the obtained water by refrigerating equipment.
b. To increase the efficiency of water obtaining by a humidity generator that is used with drinkable water and/or not drinkable.
c. To obtain water from Municipal or Collective supply, and/or of the water obtained from a well, and/or of the water obtained in domestic and industrial containers by an electronic control of regulation of the flow which regulates the water exit to treat it subsequently. Keep flow range between 20 liters per hour to 50 liters per hour.
d. To raise the concentration of the oxygen in the air by an oxygen concentrator from 21% to 90-95%, eliminating all the pollutants and most of the nitrogen preventing the formation of unwanted nitrogen oxides.
e. To generate an oxidant through the current rich in oxygen channeling to a stabilized sterilization source in which at high voltage above 10,000 volts and at a higher frequency than 20,000Hz a selective oxidant is achieved.
f. The temperature of the obtained waters in a) or c) will be in the range between 5ºC and 25ºC, ideals temperatures to accept the subsequent chemical reactions.
g. To carry out a Batch Process in a primary sterilization container in which through a Chemical Process generated between the selective oxidant obtained in e) and/or any of the waters obtained from the procedure a) or c) and adequate to the indicated temperatures in f), the process submitted to a range of pressure between 10 grs. And 100 grs. and with a permanence time or chemical reaction between the pollutants and the selective oxidant not less than 2 hours, parameters which are in function to the quality of the generated oxidant, which is all regulated by an analytical controller that permits to check the operative variables and determine the end of the chemical process used.
h. To carry out the adsorption process with the water free of pollutants with the purpose of obtaining colorless, odorless and insipid water, basic conditions for the water to be drinkable, which is all done by a specific adsorbent from 1,000 to 2,000m2/g. In this operation separating the totality of the remaining oxidant is to be considered, the generated selective oxidant is slightly soluble in water which helps in this stage. As it is a natural oxidant, it does not leave residual effects in the water.
i. To channel the water without any oxidant, odor, taste, or color to a water container to consume.
j. To be provided with a balanced system of sterilization of all the circuits and containers which, permanently and subsequently to a power cut, must remain inert with the selective oxidant to prevent any bacterial contamination or any of other kind.
k. To be provided in the container of water to be obtained with two dispensers of minerals in which it can be incorporated minerals, polivitaminics, carbohydrates with the purpose of obtaining balanced water, water for sportspeople, water for nutritional shortage.
l. To be provided with an electronic device that controls the physical-chemical process of water purification in situ completely. The electronic device is the result of an organized sequence of stages generated by the sensors of level control of the different containers.

Statement under Art. 19.1 PCT
According to the article 19 of the treaty of the Patent Cooperation Treaty (PCT) and with the regulations that it develops, new pages 35 to 38 are attached of the claims of the PCT/IB 2010/003378 application.

Where originally there were 11 claims (pages 35 to 38), after the modification carried out 8 claims (pages 35 to 38) exist, having deleted the reclaims 4, 5, and 7. Consequently, pages 35 to 38 of the claims presented originally are substituted by pages 35 to 39
